# DEMANDE DE BREVET EUROPEEN

(11) **EP 2 056 120 A1**
(43) Date de publication de la demande: **06.05.2009**
(21) Numéro de dépôt: 08167272.7
(22) Date de dépôt: 22.10.2008
(51) Int. Cl.: G01S 5/02

(54) **Procédé de localisation d'un terminal connecté à un réseau WLAN à partir de données cartographiques et de la position d'un moyen de détection voisin et terminal et serveur associés**

(30) Priorité: 29.10.2007 FR 0758655
(71) Demandeur: Alcatel Lucent, 75008 Paris (FR)
(72) Inventeur: Robinson, Julien, 91620, NOZAY (FR); Boussard, Mathieu, 91620, NOZAY (FR); Bataille, Fabien, 91620, NOZAY (FR); Hebbar, Abdelkrim, 91620, NOZAY (FR); Leclerc, Denis, 91620, NOZAY (FR); Mongazon-Cazavet, Bruno, 91620, NOZAY (FR)
(74) Mandataire: Hedarchet, Stéphane

(57) **Abrégé**

Un procédé est dédié à la localisation de terminaux de communication radio (T) dans un réseau local de communication sans fil comprenant des points d'accès (PA1, PA2) de positions connues, et consiste à déterminer le niveau de réception d'un terminal (T) présent dans le réseau puis à estimer la localisation de ce terminal (T) au moyen d'un algorithme (AL) alimenté avec le niveau de réception déterminé et des données cartographiques représentant des niveaux de réception de signaux émis par les points d'accès en correspondance de positions de réception connues. On prévoit également en des endroits de positions connues du réseau des moyens de détection (RE1) disposant d'identifiants et propres à fournir leur identifiant en cas de détection d'un terminal (T) dans leur voisinage. En cas de réception d'un identifiant de moyen de détection (RE1), on détermine la position de ce dernier puis la différence entre cette position et la localisation estimée du terminal (T) voisin détecté, et si cette différence est supérieure à un seuil choisi on détermine des données de correction destinées à adapter l'algorithme (AL) concerné en fonction de la différence déterminée.

## Description

L'invention concerne les réseaux locaux de communication sans fil ou WLAN (« Wireless Local Area Network »), et notamment les réseaux Wi-Fi, et plus précisément la localisation des terminaux de communication radio d'usagers au sein de tels réseaux.

Comme le sait l'homme de l'art, il est possible de localiser avec une assez bonne précision un terminal (de communication radio) qui est situé dans la zone de couverture d'un réseau WLAN, comme par exemple un réseau Wi-Fi, à partir de la connaissance du niveau de réception par ce terminal des signaux radio qui sont émis par les points d'accès de ce réseau, dont les positions sont connues.

Plus précisément, cette localisation se fait en déterminant le niveau de réception d'un terminal présent dans le réseau, puis en estimant la localisation de ce terminal au moyen d'un algorithme qui est alimenté avec le niveau de réception déterminé et des données cartographiques qui représentent des niveaux de réception de signaux émis par les points d'accès en correspondance de positions (géographiques) de réception connues. Ce procédé de localisation est connu sous le mot anglais « fingerprint » (empreintes) du fait qu'il repose sur une cartographie des niveaux de réception dans une partie au moins de la zone de couverture d'un réseau WLAN.

Les données cartographiques sont généralement le résultat de mesures de niveau de réception qui sont effectuées au moyen de terminaux, par des techniciens, en des endroits du réseau dont les positions sont connues avec une précision élevée.

Ces données cartographiques sont téléchargées dans les terminaux des usagers qui sont équipés d'un module de localisation comportant un algorithme de localisation.

L'inconvénient principal de cette méthode de localisation réside dans le fait qu'elle offre une précision qui est variable dans le temps et/ou en fonction des types (et/ou marques) des terminaux des usagers. Cette variabilité dans le temps peut avoir plusieurs origines, comme par exemple les variations du niveau de charge de la batterie du terminal, la présence de perturbations électromagnétiques, la présence temporaire d'éléments réflecteurs ou absorbants, et les variations de puissance d'émission des points d'accès.

L'invention a donc pour but d'améliorer la situation, et plus précisément de réduire les variations de précision de localisation des terminaux.

Elle propose à cet effet un procédé dédié à la localisation de terminaux (de communication radio) dans un réseau local de communication sans fil comprenant des points d'accès de positions connues, et consistant à déterminer le niveau de réception d'un terminal présent dans le réseau, puis à estimer la localisation de ce terminal au moyen d'un algorithme alimenté avec le niveau de réception déterminé et des données cartographiques représentant des niveaux de réception de signaux émis par les points d'accès en correspondance de positions de réception connues.

Ce procédé de localisation se caractérise par le fait :
- que l'on prévoit également en des endroits de positions connues du réseau des moyens de détection disposant d'identifiants et propres à fournir leur identifiant en cas de détection d'un terminal dans leur voisinage, et
- qu'en cas de réception d'un identifiant de moyen de détection on détermine la position de ce moyen de détection puis la différence entre cette position et la localisation estimée du terminal voisin détecté, et si cette différence est supérieure à un seuil choisi on détermine des données de correction destinées à adapter l'algorithme concerné en fonction de la différence déterminée.

Le procédé selon l'invention peut comporter d'autres caractéristiques qui peuvent être prises séparément ou en combinaison, et notamment :
- on peut utiliser des moyens de détection du type dit à champ proche, comme par exemple des radio-étiquettes de type RFID ;
- chaque terminal peut être équipé d'un algorithme de localisation. Dans ce cas, lorsqu'un moyen de détection détecte un terminal dans son voisinage, il transmet son propre identifiant à ce terminal et ce dernier peut transmettre à un serveur choisi l'identifiant reçu et la localisation estimée par son propre algorithme. Le serveur peut alors i) déterminer la position du moyen de détection qui est désigné par l'identifiant reçu, en accédant à une table stockant des identifiants de moyens de détection en correspondance de positions géographiques, puis les éventuelles données de correction en fonction des position et localisation estimée, et ii) transmettre au terminal détecté ces données de correction de sorte qu'il adapte son algorithme ;
- en variante, lorsqu'un moyen de détection détecte un terminal dans son voisinage, il transmet son propre identifiant à ce terminal. Ce dernier peut alors déterminer la position du moyen de détection qui est désigné par l'identifiant reçu, en accédant à une table stockant des identifiants de moyens de détection en correspondance de positions géographiques, puis les éventuelles données de correction en fonction des position et localisation estimée. Il peut ensuite éventuellement adapter son algorithme au moyen de ces données de correction.

L'invention propose également un premier terminal (de communication radio), propre à se connecter à un réseau local de communication sans fil comprenant des points d'accès de positions connues, et comprenant des moyens d'analyse chargés de déterminer le niveau de réception des signaux radio qui sont émis par les points d'accès et des moyens de localisation comportant un algorithme destiné à estimer la localisation du premier terminal à partir d'un niveau de réception déterminé et de données cartographiques représentant des niveaux de réception de signaux émis par les points d'accès en correspondance de positions de réception connues.

Ce premier terminal se caractérise par le fait que ses moyens de localisation sont également chargés, en cas de réception d'un identifiant transmis par un moyen de détection situé en un endroit de position connue du réseau, consécutivement à la détection du premier terminal dans son voisinage, de faire transmettre à un serveur choisi l'identifiant reçu et une première estimation de la localisation du premier terminal fournie par l'algorithme consécutivement à la détermination du niveau de réception en cours par les moyens d'analyse.

Les moyens de localisation de ce premier terminal peuvent être également chargés, en cas de réception de données de correction destinées à adapter leur algorithme en fonction d'une différence entre la position du moyen de détection voisin et la première estimation de localisation, d'adapter l'algorithme au moyen des données de correction de sorte qu'il délivre une seconde estimation de la localisation du terminal.

L'invention propose également un second terminal (de communication radio), propre à se connecter à un réseau local de communication sans fil comprenant des points d'accès de positions connues, et comprenant des moyens d'analyse chargés de déterminer le niveau de réception des signaux radio qui sont émis par les points d'accès et des moyens de localisation comportant un algorithme destiné à estimer la localisation du premier terminal à partir d'un niveau de réception déterminé et de données cartographiques représentant des niveaux de réception de signaux émis par les points d'accès en correspondance de positions de réception connues.

Ce second terminal se caractérise par le fait que ses moyens de localisation sont également chargés, en cas de réception d'un identifiant transmis par un moyen de détection situé en un endroit de position connue du réseau, consécutivement à la détection du second terminal dans son voisinage, de déterminer i) la position du moyen de détection désigné par l'identifiant reçu, en accédant à une table stockant des identifiants de moyens de détection en correspondance de positions géographiques, puis ii) la différence entre cette position et la première estimation de localisation, et, si cette différence est supérieure à un seuil choisi, de déterminer des données de correction destinées à adapter l'algorithme de localisation de leur second terminal en fonction de la différence déterminée, de sorte qu'il délivre de nouvelles estimations de la localisation de son second terminal.

Le premier terminal et/ou le second terminal peu(ven)t être agencé(s) pour recevoir des identifiants de moyens de détection du type dit à champ proche, comme par exemple des radio-étiquettes de type RFID.

L'invention propose également un serveur, pour un réseau local de communication sans fil comportant des points d'accès de positions connues, comprenant des moyens de traitement chargés, en cas de réception d'un identifiant d'un moyen de détection, situé en un endroit de position connue du réseau, et d'une première estimation de la localisation d'un terminal (de communication radio) déterminée par un algorithme de localisation, i) de déterminer la position du moyen de détection en accédant à une table stockant des identifiants de moyens de détection en correspondance de positions géographiques, puis ii) de déterminer la différence entre cette position et la première estimation de localisation, et iii) si cette différence est supérieure à un seuil choisi, de déterminer des données de correction destinées à adapter l'algorithme de localisation du terminal en fonction de cette différence déterminée, et de faire transmettre ces données de correction au terminal.

Les moyens de traitement de ce serveur peuvent être agencés pour déterminer des positions de moyens de détection du type dit à champ proche, comme par exemple des radio-étiquettes de type RFID.

L'invention propose également un premier réseau local de communication sans fil comprenant i) des points d'accès de positions connues, ii) au moins un premier terminal du type de celui présenté ci-avant, iii) au moins un moyen de détection situé en un endroit de position connue du réseau et propre à transmettre son identifiant consécutivement à la détection d'un premier terminal, et iv) un serveur du type de celui présenté ci-avant.

L'invention propose également un second réseau local de communication sans fil comprenant i) des points d'accès de positions connues, ii) au moins un second terminal du type de celui présenté ci-avant, et iii) au moins un moyen de détection situé en un endroit de position connue du réseau et propre à transmettre son identifiant consécutivement à la détection d'un second terminal.

L'invention est particulièrement bien adaptée, bien que de façon non exclusive, aux réseaux de communication de type Wi-Fi, ainsi qu'à tous les réseaux sans fil à courte portée.

D'autres caractéristiques et avantages de l'invention apparaîtront à l'examen de la description détaillée ci-après, et des dessins annexés, sur lesquels :

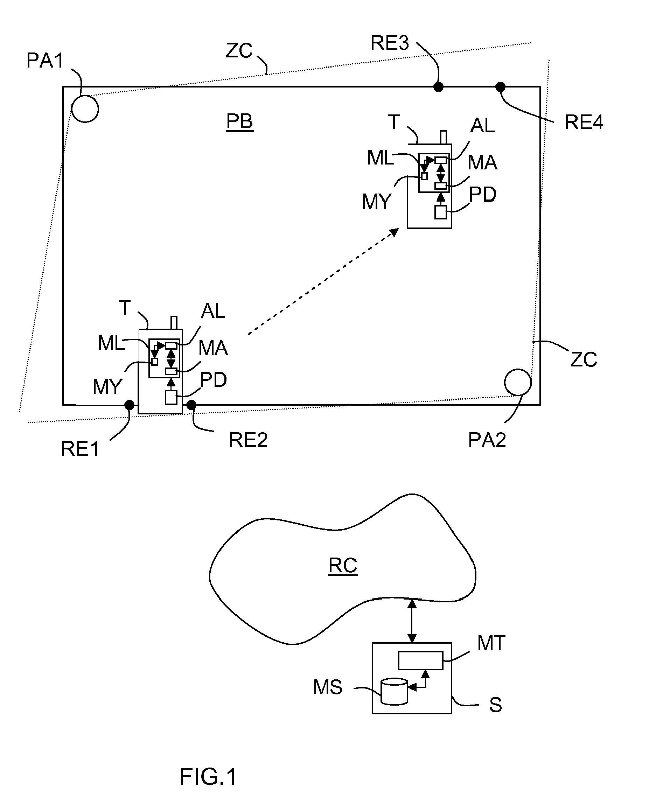

- la figure 1 illustre de façon schématique et fonctionnelle un réseau local de communication sans fil équipé de moyens de détection et d'un premier exemple de réalisation de serveur de localisation, et auquel est connecté un premier exemple de réalisation d'un terminal de communication radio selon l'invention, et

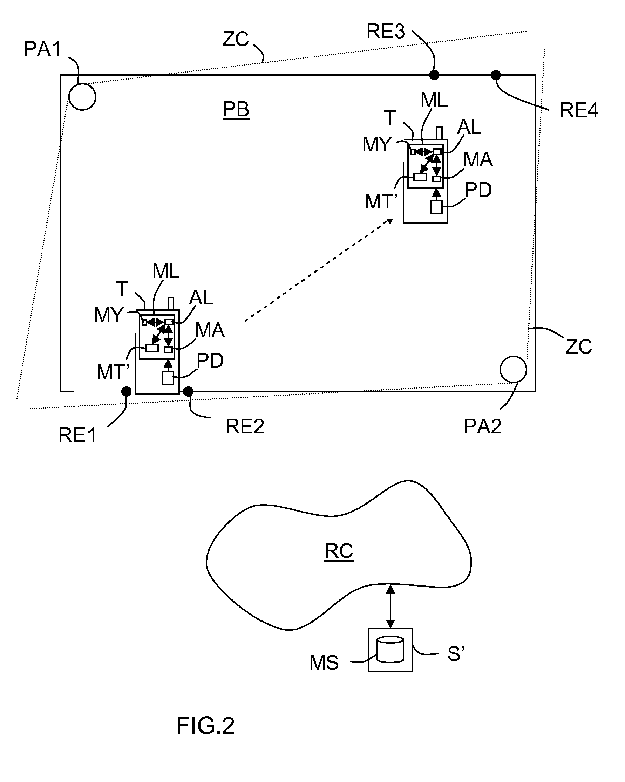

- la figure 2 illustre de façon schématique et fonctionnelle un réseau local de communication sans fil équipé de moyens de détection et d'un second exemple de réalisation de serveur de localisation, et auquel est connecté un second exemple de réalisation d'un terminal de communication radio selon l'invention.

Les dessins annexés pourront non seulement servir à compléter l'invention, mais aussi contribuer à sa définition, le cas échéant.

L'invention a pour objet de permettre la réduction des variations de précision de localisation des terminaux de communication radio qui sont connectés à un réseau local de communication sans fil.

Dans ce qui suit, on considère à titre d'exemple non limitatif que le réseau local (de communication) sans fil est de type Wi-Fi (IEEE 802.11g). Mais l'invention n'est pas limitée à ce type de réseau local sans fil. Elle concerne en effet tous les réseaux locaux de communication sans fil ou WLAN (« Wireless Local Area Network »), comme par exemple les réseaux conformes aux standards IEEE 802.11a, ETSI HiperLAN/2, et WiMAX (regroupement des standards 802.16 et HiperMan, notamment), et d'une manière générale tous les réseaux sans fil à courte portée.

Par ailleurs, on considère dans ce qui suit, à titre d'exemple non limitatif, que les terminaux de communication radio (T) sont des téléphones mobiles (ou cellulaires). Mais, l'invention n'est pas limitée à ce type de terminal de communication radio. Elle concerne en effet tout équipement de communication radio, portable ou mobile (ou cellulaire), et disposant d'une interface de communication sans fil. Par conséquent, il pourra également et notamment s'agir d'un ordinateur portable, d'un assistant personnel numérique (ou PDA), ou d'un récepteur de contenus multimédia portable, dès lors qu'il est équipé de moyens de communication radio et/ou satellitaires.

Comme cela est schématiquement et fonctionnellement illustré sur la figure 1, un réseau local sans fil (ici de type Wi-Fi), comprend, d'une part, un réseau d'accès, comportant des points d'accès PAi (ici i = 1 ou 2, mais il peut prendre n'importe quelle valeur supérieure ou égale à 1), auxquels peuvent se connecter des terminaux (de communication radio) T, et d'autre part, un réseau de coeur RC couplé à son réseau d'accès.

Chaque point d'accès PAi est implanté en une position géographique connue et peut émettre et recevoir des signaux radio dans une zone dite de couverture ZC (ici matérialisée par deux demi-axes en pointillés). Dans l'exemple non limitatif illustré sur les figures 1 et 2, les points d'accès PAi sont implantés dans deux extrémités opposées d'une pièce PB d'un bâtiment. Mais, l'invention n'est pas limitée à ce type d'implantation. Les points d'accès PAi peuvent en effet être implantés dans n'importe quelle zone interne ou externe à un bâtiment, et en particulier lorsque cette zone dispose de moyens d'accès comme par exemple une porte ou un portique.

Afin de permettre la mise en oeuvre de l'invention, le réseau (ici Wi-Fi) comprend en au moins un endroit de position géographique connue au moins un moyen de détection REj chargé de détecter la présence dans son voisinage immédiat d'un terminal T, et, en cas de détection, d'émettre par voie d'ondes un message comprenant son identifiant personnel. La position géographique de chaque moyen de détection REj est stockée en correspondance de son identifiant, par exemple dans une table de correspondance.

A titre d'exemple non limitatif, chaque moyen de détection REj met en oeuvre une technique de détection du type dit à champ proche ou NFC (« Near Field Communication ». Par exemple, chaque moyen de détection REj peut se présenter sous la forme d'une radio-étiquette de type RFID, passive ou semi-passive. Il est rappelé qu'une radio-étiquette est un dispositif comprenant une antenne d'émission/réception et une puce stockant un identifiant (ou EPC (« Identifiant Product Code ») et agencé, lorsqu'il est activé par une puce de détection PD implantée dans un terminal T très proche (typiquement quelques dizaines de centimètres), pour émettre par voie d'ondes un message comprenant l'identifiant qui est stocké dans sa puce.

Un moyen de détection REj (par exemple une radio-étiquette) peut par exemple être implanté au niveau d'un moyen d'accès à une zone, telle qu'une pièce PB, située dans la zone de couverture ZC d'au moins un point d'accès PAi. Ainsi, on peut par exemple installer une radio-étiquette REj sur l'un au moins des deux montants d'un encadrement de porte ou d'un portique.

Dans l'exemple non limitatif illustré sur les figures, deux paires de radio-étiquettes (RE1, RE2) et (RE3, RE4) (ici j = 1 à 4) ont été installées sur les deux montants de deux portes qui contrôlent l'accès à la pièce PB, de manière à renforcer la probabilité de détection d'un terminal T lorsque son usager pénètre dans la pièce PB par l'une de ses portes. Dans ce cas, les identifiants des radio-étiquettes REj d'une même paire sont préférentiellement stockées en correspondance d'une même position géographique (celle de la porte qu'elles équipent).

La mise en oeuvre de l'invention nécessite également des données cartographiques représentant des niveaux de réception de signaux radio émis par les points d'accès PAi en correspondance de positions (géographiques) de réception connues. Les données cartographiques sont par exemple le résultat de mesures de niveau de réception effectuées au moyen de terminaux radio, par des techniciens, en des endroits du réseau d'accès dont les positions sont connues avec une précision élevée.

La mise en oeuvre de l'invention nécessite également que chaque terminal T dispose au moins d'un module d'analyse MA chargé de déterminer le niveau de réception des signaux radio qui sont émis par les points d'accès PAi.

La mise en oeuvre de l'invention nécessite également des moyens de localisation ML comportant un algorithme AL destiné à estimer la localisation d'un terminal T à partir du niveau de réception, déterminé par le module d'analyse MA de ce dernier, et des données cartographiques précitées.

De préférence, et comme illustré, chaque terminal T est équipé de ses propres moyens de localisation ML, afin de pouvoir effectuer ses propres estimations de localisation. Dans ce cas, et comme illustré, il est avantageux que les moyens de localisation ML d'un terminal T comprennent des moyens de stockage MY (comme par exemple une mémoire) dans lesquels sont au moins stockées les données cartographiques précitées. Ces données cartographiques peuvent par exemple être stockées dans des moyens de stockage MS (tels qu'une mémoire) d'un serveur de localisation S (ou S'), et téléchargées dans les terminaux T. Elles peuvent ainsi être mises à jour (éventuellement régulièrement).

Selon l'invention, lorsqu'une radio-étiquette REj détecte un terminal T, et plus précisément la puce de détection PD qu'il contient, il fournit son identifiant par voie d'ondes. En présence de moyens de détection REj du type dit à champ proche, c'est la puce de détection PD du terminal T qui a été détecté qui reçoit dans de bonnes conditions l'identifiant fourni. A réception de cet identifiant, on procède alors à la détermination de la position de la radio-étiquette REj qui l'a fourni. Cette détermination peut se faire en deux endroits différents selon le mode de réalisation utilisé.

Dans un premier mode de réalisation illustré sur la figure 1, c'est un serveur de localisation S, connecté au réseau RC, qui est chargé d'effectuer la détermination de la position de la radio-étiquette REj qui a fourni son identifiant consécutivement à la détection du terminal T. Cet identifiant de radio-étiquette REj est transmis par voie d'ondes (via l'un des points d'accès PAi) au serveur de localisation S par le terminal détecté T qui l'a reçu. Il est important de noter que cet identifiant est transmis conjointement avec la dernière estimation de localisation qui a été effectuée par l'algorithme de localisation AL des moyens de localisation ML du terminal détecté T à partir du dernier niveau de réception déterminé par le module d'analyse MA de ce dernier et des données cartographiques stockées dans la mémoire MY.

Le serveur de localisation S comprend un module de traitement MT, couplé à sa mémoire MS et chargé, chaque fois qu'il reçoit d'un terminal détecté T l'identifiant de la radio-étiquette REj qui l'a détecté et sa « première » estimation de localisation, d'accéder à la mémoire MS afin de déterminer dans la table de correspondance qu'elle stocke la position géographique de la radio-étiquette REj qui est stockée en correspondance de l'identifiant reçu. Puis, le module de traitement MT détermine la différence entre cette position obtenue dans la table et la première estimation de localisation reçue.

Si cette différence est nulle ou inférieure ou égale à un seuil choisi, le serveur de localisation n'intervient plus.

En revanche, si la différence est strictement supérieure au seuil choisi, le module de traitement MT détermine des données de correction qui sont destinées à adapter l'algorithme de localisation AL du terminal détecté T en fonction de cette différence. On entend ici par « adapter un algorithme de localisation AL » le fait de le recalibrer en modifiant l'un au moins de ses paramètres de fonctionnement de sorte qu'il soit en mesure d'estimer la localisation de son terminal T avec une précision accrue, et notamment correspondant sensiblement à la position de la radio-étiquette REj qui l'a détecté, lorsqu'il est situé dans son voisinage. On notera qu'un paramètre de fonctionnement peut par exemple être une donnée cartographique. Une fois que le module de traitement MT a déterminé des données de correction pour un terminal détecté T, il ordonne à son serveur de localisation S de les transmettre à ce terminal T via les points d'accès PAj.

Lorsqu'un terminal T reçoit des données de correction du serveur de localisation S, il les transmet à ses moyens de localisation ML. Ces derniers adaptent alors l'algorithme de localisation AL avec les données de correction reçues (fonction de la différence de position déterminée), de sorte qu'il puisse délivrer de nouvelles estimations de la localisation de son terminal T.

Dans un second mode de réalisation illustré sur la figure 2, c'est le terminal T, qui a été détecté par une radio-étiquette REj, qui est chargé d'effectuer la détermination de la position de cette dernière. Ses moyens de localisation ML comprennent un module de traitement MT' chargé, chaque fois qu'il reçoit un identifiant d'une radio-étiquette REj, d'accéder à une table de correspondance entre les positions géographiques des radio-étiquettes REj et leurs identifiants, afin de déterminer la position qui est stockée en correspondance de l'identifiant reçu.

On notera que cette table est de préférence stockée dans la mémoire MS du terminal détecté T. Cette table peut par exemple être téléchargée à l'initiative du serveur de localisation S' (éventuellement régulièrement). Ce dernier stocke les données qui la constituent dans des moyens de stockage MS (tels qu'une mémoire) qui peuvent également stocker les données cartographiques.

Une fois que le module de traitement MT' a déterminé la position de la radio-étiquette REj détectrice, il détermine la différence entre cette position et l'estimation de localisation qui a été effectuée par l'Igorithme de localisation AL à partir du dernier niveau de réception déterminé par le module d'analyse MA et des données cartographiques stockées dans la mémoire MY.

Si cette différence est nulle ou inférieure ou égale à un seuil choisi, le traitement prend fin.

En revanche, si la différence est strictement supérieure au seuil choisi, le module de traitement MT' détermine des données de correction qui sont destinées à adapter l'algorithme de localisation AL en fonction de cette différence. Une fois que le module de traitement MT' a terminé des données de correction, il les utilise pour adapter l'algorithme de localisation AL, de sorte qu'il puisse délivrer de nouvelles estimations de la localisation de son terminal T.

Grâce à l'invention, et comme illustré sur les figures 1 et 2, lorsque le terminal T parvient au niveau de la porte de la pièce PB, munie des radio-étiquettes RE1 et RE2, il est détecté par l'une au moins d'entre elles, ce qui induit une éventuelle recalibration de son algorithme de localisation AL, qui lui permet de déterminer avec précision (après recalage sur la position de la porte) sa localisation lors de son parcours à l'intérieur de la pièce PB. On notera que l'algorithme de localisation AL peut éventuellement faire l'objet d'une nouvelle recalibration lorsqu'il ressortira de la pièce PB par l'une de ses portes munie d'une paire de radio-étiquettes (RE1 et RE2) ou (RE3 et RE4).

Les moyens de localisation ML et le module d'analyse MA du terminal T, et le module de traitement MT et les moyens de mémorisation MY du serveur S peuvent être réalisés sous la forme de circuits électroniques, de modules logiciels (ou informatiques), ou d'une combinaison de circuits et de logiciels.

L'invention ne se limite pas aux modes de réalisation de terminal de communication radio, serveur de localisation, réseau local de communication sans fil et procédé de localisation décrits ci-avant, seulement à titre d'exemple, mais elle englobe toutes les variantes que pourra envisager l'homme de l'art dans le cadre des revendications ci-après.

## Revendications

1. Procédé de localisation de terminaux de communication radio (T) dans un réseau local de communication sans fil comprenant des points d'accès (PAi) de positions connues, ledit procédé consistant à déterminer le niveau de réception d'un terminal (T) présent dans ledit réseau puis à estimer la localisation dudit terminal (T) au moyen d'un algorithme (AL) alimenté avec ledit niveau de réception déterminé et des données cartographiques représentant des niveaux de réception de signaux émis par lesdits points d'accès (PAi) en correspondance de positions de réception connues, **caractérisé en ce que** l'on prévoit également en des endroits de positions connues dudit réseau des moyens de détection (REj) disposant d'identifiants et propres à fournir leur identifiant en cas de détection d'un terminal (T) dans leur voisinage, et **en ce qu'**en cas de réception d'un identifiant de moyen de détection (REj) on détermine la position de ce moyen de détection (REj) puis la différence entre cette position et la localisation estimée du terminal (T) voisin détecté, et si ladite différence est supérieure à un seuil choisi on détermine des données de correction destinées à adapter l'algorithme (AL) concerné en fonction de ladite différence déterminée.

2. Procédé selon la revendication 1, **caractérisé en ce que** lesdits moyens de détection (REj) sont du type dit à champ proche.

3. Procédé selon la revendication 2, **caractérisé en ce que** lesdits moyens de détection (REj) sont des radio-étiquettes de type RFID.

4. Procédé selon l'une des revendications 1 à 3, **caractérisé en ce que** chaque terminal (T) est équipé d'un algorithme de localisation (AL), et **en ce qu'**en cas de détection d'un terminal (T) dans son voisinage le moyen de détection (REj) transmet son propre identifiant à ce terminal (T) et ce dernier transmet à un serveur choisi (S) ledit identifiant reçu et la localisation estimée par son propre algorithme (AL), puis ledit serveur (S) i) détermine la position du moyen de détection (REj) désigné par l'identifiant reçu, en accédant à une table stockant des identifiants de moyens de détection (REj) en correspondance de positions géographiques, puis les éventuelles données de correction en fonction desdites position et localisation estimée, et ii) transmet audit terminal (T) détecté lesdites données de correction de sorte qu'il adapte son algorithme (AL).

5. Procédé selon l'une des revendications 1 à 3, **caractérisé en ce que** chaque terminal (T) est équipé d'un algorithme de localisation (AL), et **en ce qu'**en cas de détection d'un terminal (T) dans son voisinage le moyen de détection (REj) transmet son propre identifiant à ce terminal (T) et ce dernier détermine la position du moyen de détection (REj) désigné par l'identifiant reçu, en accédant à une table stockant des identifiants de moyens de détection (REj) en correspondance de positions géographiques, puis les éventuelles données de correction en fonction desdites position et localisation estimée, et adapte éventuellement son algorithme (AL) au moyen de ces données de correction.

6. Terminal de communication radio (T) propre à se connecter à un réseau local de communication sans fil comprenant des points d'accès (PAi) de positions connues, et comprenant des moyens d'analyse (MA) agencés pour déterminer le niveau de réception des signaux radio émis par lesdits points d'accès (PAi) et des moyens de localisation (ML) comportant un algorithme destiné à estimer la localisation dudit terminal (T) à partir d'un niveau de réception déterminé et de données cartographiques représentant des niveaux de réception de signaux émis par lesdits points d'accès (PAi) en correspondance de positions de réception connues, **caractérisé en ce que** lesdits moyens de localisation (ML) sont agencés, en cas de réception d'un identifiant transmis par un moyen de détection (REj) situé en un endroit de position connue du réseau, consécutivement à la détection dudit terminal (T) dans son voisinage, pour faire transmettre à un serveur choisi (S) ledit identifiant reçu et une première estimation de la localisation dudit terminal (T) fournie par ledit algorithme consécutivement à la détermination du niveau de réception en cours par lesdits moyens d'analyse (MA).

7. Terminal selon la revendication 6, **caractérisé en ce que** lesdits moyens de localisation (ML) sont agencés, en cas de réception de données de correction destinées à adapter leur algorithme en fonction d'une différence entre la position dudit moyen de détection (REj) voisin et la première estimation de localisation, pour adapter ledit algorithme (AL) au moyen desdites données de correction de sorte qu'il délivre une seconde estimation de la localisation dudit terminal (T).

8. Terminal de communication radio (T) propre à se connecter à un réseau local de communication sans fil comprenant des points d'accès (PAi) de positions connues, et comprenant des moyens d'analyse (MA) agencés pour déterminer le niveau de réception des signaux radio émis par lesdits points d'accès (PAi) et des moyens de localisation (ML) comportant un algorithme destiné à estimer la localisation dudit terminal (T) à partir d'un niveau de réception déterminé et de données cartographiques représentant des niveaux de réception de signaux émis par lesdits points d'accès (PAi) en correspondance de positions de réception connues, **caractérisé en ce que** lesdits moyens de localisation (ML) sont agencés, en cas de réception d'un identifiant transmis par un moyen de détection (REj) situé en un endroit de position connue du réseau, consécutivement à la détection dudit terminal (T) dans son voisinage, pour déterminer i) la position du moyen de détection (REj) désigné par l'identifiant reçu, en accédant à une table stockant des identifiants de moyens de détection (REj) en correspondance de positions géographiques, puis ii) la différence entre cette position et la première estimation de localisation, et, si ladite différence est supérieure à un seuil choisi, pour déterminer des données de correction destinées à adapter l'algorithme de localisation (AL) de son terminal (T) en fonction de ladite différence déterminée, de sorte qu'il délivre de nouvelles estimations de la localisation de son terminal (T).

9. Terminal selon l'une des revendications 6 à 8, **caractérisé en ce qu'**il est agencé pour recevoir des identifiants de moyens de détection (REj) du type dit à champ proche.

10. Terminal selon la revendication 9, **caractérisé en ce qu'**il est agencé pour recevoir des identifiants de moyens de détection (REj) agencés sous la forme de radio-étiquettes de type RFID.

11. Serveur (S) pour un réseau local de communication sans fil comprenant des points d'accès (PAi) de positions connues, **caractérisé en ce qu'**il comprend des moyens de traitement (MT) agencés, en cas de réception d'un identifiant d'un moyen de détection (REj), situé en un endroit de position connue du réseau, et d'une première estimation de la localisation d'un terminal de communication radio (T) déterminée par un algorithme de localisation (AL), i) pour déterminer la position du moyen de détection (REj) en accédant à une table stockant des identifiants de moyens de détection (REj) en correspondance de positions géographiques, puis ii) pour déterminer la différence entre cette position et la première estimation de localisation, et iii) si ladite différence est supérieure à un seuil choisi, pour déterminer des données de correction destinées à adapter l'algorithme de localisation (AL) dudit terminal (T) en fonction de ladite différence déterminée, et pour faire transmettre ces données de correction audit terminal (T).

12. Serveur selon la revendication 11, **caractérisé en ce que** lesdits moyens de traitement (MT) sont agencés pour déterminer des positions de moyens de détection (REj) du type dit à champ proche.

13. Serveur selon la revendication 12, **caractérisé en ce que** lesdits moyens de traitement (MT) sont agencés pour déterminer des positions de moyens de détection (REj) agencés sous la forme de radio-étiquettes de type RFID.

14. Réseau local de communication sans fil comprenant des points d'accès (PAi) de positions connues, **caractérisé en ce qu'**il comprend i) au moins un terminal selon l'une des revendications 6, 7, 9 et 10, ii) au moins un moyen de détection (REj) situé en un endroit de position connue du réseau et propre à transmettre son identifiant consécutivement à la détection dudit terminal (T), et iii) un serveur (S) selon l'une des revendications 11 à 13.

15. Réseau local de communication sans fil comprenant des points d'accès (PAi) de positions connues, **caractérisé en ce qu'**il comprend i) au moins un terminal selon l'une des revendications 8 à 10, et ii) au moins un moyen de détection (REj) situé en un endroit de position connue du réseau et propre à transmettre son identifiant consécutivement à la détection dudit terminal (T).
